# EUROPEAN PATENT SPECIFICATION

(11) **EP 2 357 770 B1**
(45) Date of publication and mention of the grant of the patent: **25.06.2014**
(21) Application number: 09825722.3
(22) Date of filing: 12.05.2009
(51) Int. Cl.: H04L 29/06

(54) **SYNCHRONIZATION SCHEDULING METHOD**
VERFAHREN FÜR SYNCHRONISATIONSZEITPLANUNG
PROCÉDÉ D'ORDONNANCEMENT DE SYNCHRONISATION

(30) Priority: 13.11.2008 CN 200810181205
(43) Date of publication of application: 17.08.2011
(73) Proprietor: ZTE Corporation, Shenzhen, Guangdong 518057 (CN)
(72) Inventor: ZHAI, Hengxing, Guangdong 518057 (CN); AI, Jianxun, Guangdong 518057 (CN)
(74) Representative: Davies, Gregory Mark
(86) International application number: PCT/CN2009/071748
(87) International publication number: WO 2010/054547

(56) References cited:
- CN-A- 101 039 175
- CN-A- 101 039 175
- CN-A- 101 047 437
- US-A1- 2005 281 290
- US-A1- 2006 146 745
- US-A1- 2006 146 745

## Description

### Technical Field

The present invention relates to the telecommunication field, and in particularly, to a synchronous scheduling method.

### Background of the Related Art

As the Internet develops fast, a lot of multi-media services come out; meanwhile, the demand of customers for mobile communication is not limited to telephone and message services any longer. Recently, the application service has been introduced into the multi-media services. The characteristic of the application service is that multiple users could receive the same data at the same time, such as the video on demand, television broadcast, video conference, network education, and interactive games etc.

To use the mobile network resource effectively, the Multimedia Broadcast Multicast service (MBMS) is proposed. MBMS is a point-to-multipoint service transmitting data from a data resource to multi-users, through which the network resources, including the mobile core network resources and the access network resources, especially the air interface resource, can be shared. Moreover, in 3GPP, the MBMS not only can implement the multicast and broadcast of the low rate plain text message, but also can implement the multicast and broadcast of the high rate multimedia services.

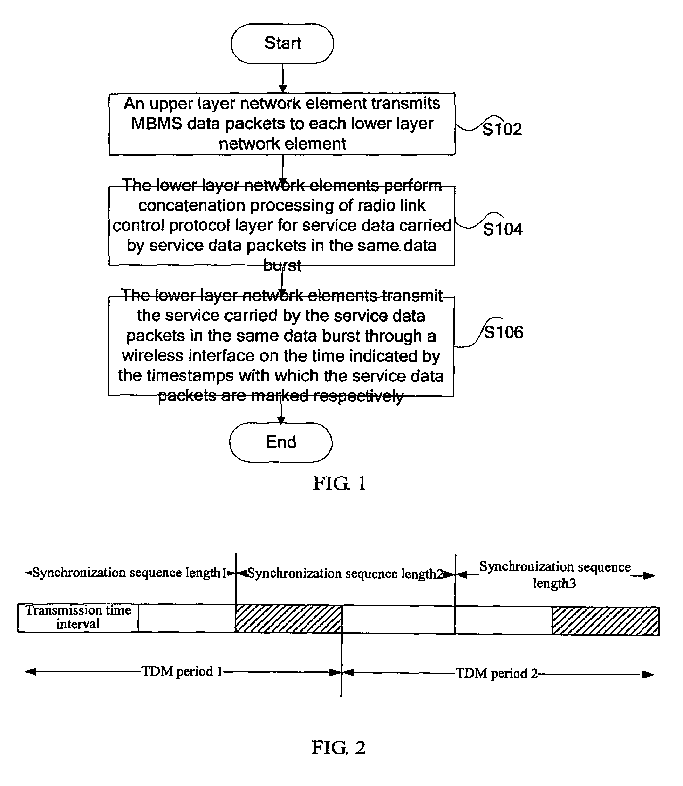

As MBMS is a service provided for the whole network, a same MBMS service may be established on different lower layer network element nodes. FIG.1 is the flow chart of method for synchronizing the MBMS services on multiple network elements according to the prior art. As shown in FIG. 1, the flow includes the following processing:

Step S 102, an upper layer network element transmitting the MBMS service data packets to each lower layer network element. Wherein, the service data packets bear the service data, and carry timestamp information, data packet sequence number information, and accumulated service data length etc. The upper layer network element marks one or more continuous service data packets with the same timestamp information, and then the data packets marked with the same timestamp make up a data burst, which is also called synchronization sequence. In a special case, the upper layer network element identifies each service data packet as a data burst or a synchronization sequence, in which case each data burst or synchronization sequence contains only one service data packet.

Step S104, the lower layer network elements needing to perform the Radio Link Control (RLC) protocol layer concatenation processing on the service data carried by the service data packets in the same synchronization sequence. Wherein, RLC protocol layer concatenation processing is not performed on service data packets of different synchronization sequences, and when RLC protocol layer processing is performed on the service data packets of a synchronization sequence, the RLC sequence numbers in the RLC protocol layer are reset starting from the first data packet of each synchronization sequence, that is, the RLC sequence numbers are allocated from an appointed or configured fixed value starting from the first RLC protocol data unit (PDU) of the first data packet of each synchronization sequence. When multiple continuous data packets are lost during transmission from an upper network element to a lower network layer, the lower network element cannot determine the length of RLC PUD occupied by the lost data packets when RLC protocol layer processing is performed according to the prior art, thereby resulting in the network element having lost packets being not able to keep consistence in subsequent RLC protocol layer processing with other network elements. The advantage of such processing is to avoid the above problem by resetting the RLC sequence numbers from the beginning of each synchronization sequence, thus ensuring the consistence of the RLC sequence number of each network element from the beginning of each synchronization sequence.

Step S106, for the service data carried by the service data packets in the same synchronization sequence, the lower layer network elements transmitting the service data packets in sequence through the wireless interface on the transmitting timings corresponding to the timestamp with which the service data packets are marked. Wherein, since the above information transmitted from the upper layer network element to each lower layer network element is the same completely, the lower layer network elements can perform the same processing, thereby the MBMS service is transmitted among the cells of every lower layer network element synchronously.

At present, two methods can be used to set the timestamp information for each data packet.

Method 1. The upper layer network element makes the timestamps according to the time when the upper layer network receives the service data packets, and marks the service data packets received within a certain time period with the same timestamp. Wherein, the certain time period is called synchronization sequence length or scheduling period.

Method 2. The upper layer network element simulates the RLC protocol layer processing of the lower layer network element virtually, and marks the service data packets to be performed with RLC protocol layer concatenation processing with the same timestamp according to the virtual RLC protocol layer processing result.

Since the timestamps set with the above two method depend on the time when the service data packets arrive the upper layer network element, the interval between the timestamps of the service data packets are not certain, supposing the service data stream received by the upper layer network element is the data stream shaped according to the Quality of Service (QoS), that is to say, the bandwidth of the service data stream in any time duration is not wider than the max bandwidth defined by the QoS parameter, and supposing the channel resources of the wireless interface in the above time duration match with the QoS parameters.

An MBMS service can be transmitted via the wireless interface in the way of Time Division Multiplexing (TDM). The TDM configuration includes the following parameters: TDM period, TDM offset and TDM repetition length. The available TDM resource for a service can be represented as follows:
(CFN div N) mod TDM Rep=TDM_Offset + *i*, where *i*=0,..., TDM_Length-1,
where CFN is the Connection Frame Number; div is the operational symbol of dividing evenly; N is TTI (in number of 10 ms frames) ;mod is the operational symbol of making modulo ; TDM_Rep is the TDM repetition period , TDM_Offset is TDM offset ; TDM_Length is the number of TTIs the MBMS Service is transmitted, starting from TDM_Offset. Specifically, an MBMS service is transmitted in continuous TDM repetition length of scheduling TTIs starting from the TTI of the TDM offset in its allocated TDM period, where the max TDM repetition period is 9, and the available TTI length for the MBMS service is 40ms or 80ms. A service can only be transmitted through the wireless interface in the available transmission period configured in the TDM period.

When the data is transmitted in the way of TDM, because the timings for transmitting an MBMS service through the wireless interface is not continuous but periodical and repeated according to the TDM configuration, and the timestamp is uncertain in the existing scheduling method, the timestamp information may not be able to correspond to the start time for transmitting the MBMS service through the wireless interface, that is, the timestamp and the transmitting timing of the wireless interface (the available transmitting time) cannot correspond to each other. As an example, FIG. 2 shows the sketch map of the synchronization sequence length mismatching with the TDM period.

Recently, a method for a lower layer network element scheduling the received synchronization sequence according to scheduling transmission time interval in the MBMS synchronous system is provided in order to implement service scheduling in the multiplexing condition of TDM. Wherein the length of the scheduling transmission time interval is a common multiple of the TDM period and the length of the synchronization sequence of the service, and the lower layer network element transmits in the next scheduling transmission time interval the synchronization sequences which are in one scheduling time interval length.

In the above synchronization system, there are multiple lower layer network elements who transmit the MBMS service synchronously in the way of Multicast Broadcast Single Frequency Network (MBSFN) of TDM. However, the multiple lower layer network elements cannot have the same scheduling transmission time interval according to the method in the prior art, which will result in that different lower layer network elements adopt different scheduling method for the same service, thus the MBSFN network may be interfered with and the MBSFN condition may be destroyed.

Documents CN101039175, US 2006 146745 and US 2005 28 1290 disclose further relevant prior art.

### Content of the Invention

The present invention is provided for solving the problem that MBSFN network is disturbed and MBSFN condition is destructed due to different scheduling transmission time interval acquired by a plurality of lower layer network elements. Therefore, the main purpose of the present invention is to provide a synchronous scheduling method in order to solve the above problem..

According to one aspect of the present invention, a synchronous scheduling method is provided.

The synchronous scheduling method according to the present invention comprises: an appointed network element determining the scheduling transmission time interval according to the length of the synchronization sequence and the Time Division Multiplexing period of the service, and transmitting the determined scheduling transmission time interval to a plurality of lower layer network elements; the lower layer network elements performing scheduling processing on the service data packets according to the scheduling transmission time interval.

According to another aspect of the present invention, a synchronous scheduling method is provided.

The synchronization scheduling method according to the present invention comprises: a plurality of lower layer network elements generating scheduling transmission time interval according to the length of the synchronization sequence, Time Division Multiplexing period of a service and a predefined rule; the lower layer network elements performing the scheduling processing on the service data packets according to the scheduling transmission time interval.

Compared with prior art, the method provided by the present invention, in which multiple lower layer network elements performing the same service get the scheduling transmission time interval of the service, and adopts the same scheduling method for the service, can avoid the disturbance to the MBSFN and the destruction to the MBSFN conditions.

### Brief Description of Drawings

The drawings are used to further illustrate the present invention. The drawings are provided as a part of the description and used to explain the present invention in conjunction with the embodiments of the present invention, but do not intend to limit the present invention. The drawings are as follows:
FIG. 1 is a flow chart of a plurality of network elements processing MBMS service synchronously according to the current techniques;
FIG. 2 is a schematic diagram of an example that the length of the synchronization sequence mismatches with the TDM period according to the prior art;
FIG. 3 is a flow chart of the synchronous scheduling method according to the Embodiment 1 of the present invention;
FIG. 4 is a logical structure diagram of the upper layer network element and the lower layer network elements according to an embodiment of the present invention;
FIG. 5 is a flow chart of the synchronous scheduling method according to the method Embodiment 2 of the present invention;

### Preferred Embodiments of the Present Invention

### Function overview

The basic idea of the present invention is that: a plurality of lower layer network elements transmit the MBMS service synchronously in a way of MBSFN TDM, however these lower layer network elements cannot acquire the same scheduling transmission time interval according to the current method, thus different lower layer network elements adopt different scheduling methods for the same service, based on which case, the present invention provides a synchronous scheduling method, in which a plurality of lower layer networks performing the same service acquire the scheduling transmission time interval of the service through an assigned network element and then adopt the same scheduling method for the service, thereby solving the above problem..

The present invention will be described in detail in conjunction with accompanying drawings as follows.

### Method embodiment

A synchronous scheduling method is provided according to the embodiment of the present invention.

It should be noted that, for description convenience, the technical solution of the method embodiment of the present invention is shown and described in the steps below, which can be executed on a computer system with a set of computer executable commands. Though a logical sequence is illustrated in a corresponding figure, the shown or described steps can be executed in different sequences in other circumstances.

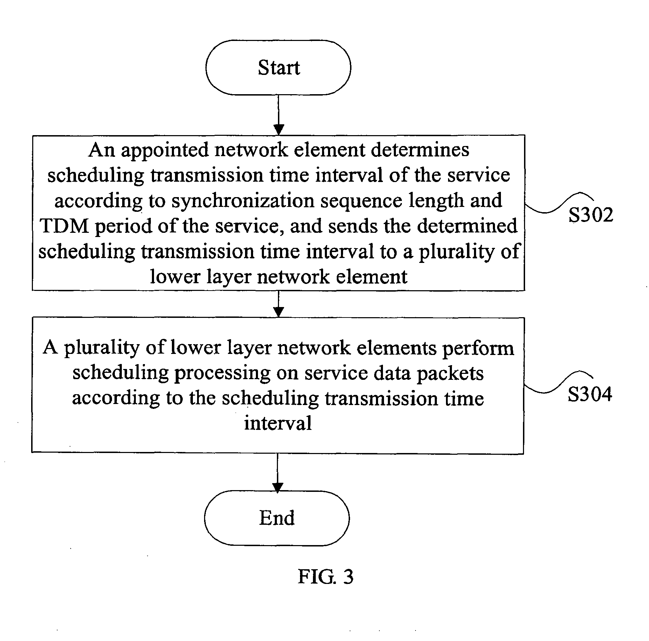

FIG. 3 is the flow chart of the synchronously scheduling method according to the embodiment of the present invention. As shown in FIG. 3, the method comprises the following steps (from step S302 to step S304).

Step S302, an appointed network element determines the scheduling transmission time interval of the service according to the length of the synchronization sequence and time division multiplexing period of the service, and sends the determined scheduling transmission time interval to multiple lower layer network elements;

Step S304, the multiple lower layer network elements perform the scheduling processing on the data packets of the service according to the scheduling transmission time interval, where the length of the synchronization sequence is also called scheduling period.

Wherein, the appointed network element includes one of the following: the upper layer network element, and a lower layer network element other than the multiple lower layer network elements.

It should be noted that the foresaid scheduling transmission time interval may correspond to a certain service, or may be configured for all the services.

Compared with the prior art, the technical solution provided in the embodiment of the present invention, in which the multiple lower layer network elements performing the same service get the scheduling transmission time interval of the service and use the same scheduling method for the service, can avoid the disturbance to the MBSFN and destruction to the MBSFN condition.

When the appointed network element is a lower layer network element other than the multiple lower layer network elements, the processing procedure of the embodiment of the present invention will be illustrated with examples 1 and 2 as follows.

### Example 1

First, the lower layer network as the appointed network element acquires the length of the synchronization sequence and the time division multiplexing period of the appointed service by the system configuration, and calculates the scheduling transmission time interval of the appointed service based on the acquired length of the synchronization sequence and the time division multiplexing period. Specifically the scheduling transmission time interval may be set as a common multiple of the length of the synchronization sequence and the time division multiplexing period, and preferably, the scheduling transmission time interval is set as the lowest common multiple of the length of the synchronization sequence and the time division multiplexing period.

Next, the lower layer network element sends through signaling message the determined scheduling transmission time interval to all the lower layer network elements performing the foresaid appointed service, then all the lower layer network elements perform the scheduling processing on the received service synchronization sequences according to the received scheduling transmission time interval.

### Example 2

First, the upper layer network element that the lower layer network element as the appointed network element belongs to informs the lower layer network element of the length of the synchronization sequence, and gets the time division multiplexing period by the system configuration. The lower layer network element calculates the scheduling transmission time interval of the appointed service based on the acquired length of the synchronization sequence and the time division multiplexing period. Specifically, the scheduling transmission time interval can be set as the common multiple of the length of the synchronization sequence and the time division multiplexing period, and preferably, the scheduling transmission time interval can be set as the lowest common multiple of the length of the synchronization sequence and the time division multiplexing period.

Next, the lower layer network element sends through signaling message the determined scheduling transmission time interval to all the lower layer network elements performing the foresaid appointed service, and then all the lower layer network elements perform the scheduling processing on the received service synchronization sequences according to the received scheduling transmission time interval.

When the appointed network element is an upper layer network element, the processing procedure of the embodiment of the present invention will be illustrated with examples 3 and 4 as follows.

### Example 3

First, the upper layer network element gets the length of the synchronization sequence and the time division multiplexing period of the appointed service by the system configuration, and calculates the scheduling transmission time interval of the appointed service based on the acquired length of the synchronization sequence and the time division multiplexing period. Specifically the scheduling transmission time interval can be set as a common multiple of the length of the synchronization sequence and the time division multiplexing period, and preferably, the scheduling transmission time interval can be set as the lowest common multiple of the length of the synchronization sequence and the time division multiplexing period.

Next, the upper layer network element sends through a signaling message the determined scheduling transmission time interval to all the lower layer network elements performing the appointed service, and then all the lower layer network elements perform the scheduling processing on the received service synchronization sequences according to the received scheduling transmission time interval.

### Example 4

First, a lower layer network element of the upper layer network element as the appointed network element informs the upper network element of the time division multiplexing period, and the upper layer network element gets the length of the synchronization sequence by the system configuration. The upper layer network element calculates the scheduling transmission time interval of the appointed service based on the acquired length of the synchronization sequence and the time division multiplexing period of the service. Specifically, the scheduling transmission time interval can be set as a common multiple of the length of the synchronization sequence and the time division multiplexing period, and preferably, the scheduling transmission time interval can be set as the lowest common multiple of the length of the synchronization sequence and the time division multiplexing period.

Next, the upper layer network element sends through a signaling message the determined scheduling transmission time interval to all the lower layer network elements performing the foresaid appointed service, and then all the lower layer network elements perform the scheduling processing on the received service synchronization sequences according to the received scheduling transmission time interval.

The following are the descriptions of the upper layer network element and the lower layer network element.

The upper layer network element is used to implement the scheduling for the received MBMS service data packets. Specifically, the upper layer network element marks each service data packet with timestamp information and calls the service data packets marked with the same timestamp information as one synchronization sequence, transmits the data packets marked with the timestamps to one or multiple lower layer network elements which belong to the upper layer network element subsequently.

The lower layer network element is used to receive the service data packets transmitted by the upper layer network element, calculate the starting time for transmitting a synchronization sequence according to the timestamp of each service data packet, perform the RLC protocol layer concatenation processing on the data packets of the same synchronization sequence during the RLC protocol layer processing, and transmit the service data packets processed by user plane protocol on the wireless network layer through the wireless interface. The lower layer network element performs the RLC reset from the beginning of each synchronization sequence and reallocates the RLC protocol layer sequence to improve the synchronization recovery when there is data lost on the wireless interface.

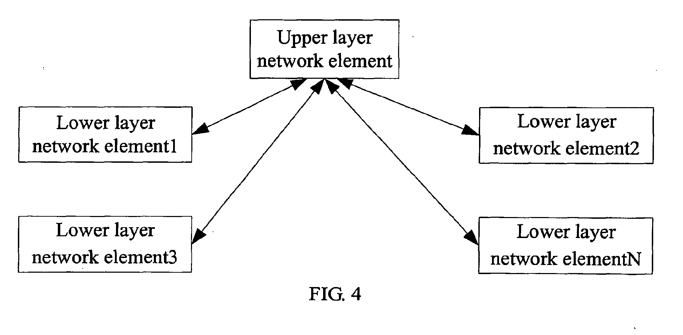

FIG. 4 is a block diagram of the logical structure of the upper layer network element and the lower layer network elements according to an embodiment of the present invention. As shown in FIG. 4, an upper layer network element connects to multiple lower layer network elements to communicate in signaling. It should be note that, the upper layer network element and the one or multiple lower layer network elements belonging to the upper layer network element may be the same network element and may also be different network elements. The upper layer network element and the lower layer network elements are just distinct logically to perform the service synchronization function together, that is, several network elements of the same kind or different kinds in physics are divided to an upper layer network element and several lower layer network elements according to logical functions, and the network elements cooperate with each other to implement transmission of MBMS service in a way of multi-cell combination in the cells of lower layer network elements.

Wherein, the combination of the upper layer network element and the lower layer network elements may be but not limited to the following combinations:
Combination 1. In the MBMS service synchronization networking in Universal Terrestrial Radio Access Network (UTRAN) system, the upper layer network element is a upper layer Gateway General Packet Radio Service Supporting Node (GGSN), a Serving General Packet Radio Service Supporting Node (SGSN) or a Broadcast Multicast Service Center (BMSC), the lower layer network elements are lower layer Radio Network Controller (RNC), wherein the interface between the upper layer network element and the lower layer network elements are the Iur interfaces. For this combination, the upper layer network element and the lower layer network element are the network elements with the same physical function.
Combination 2. In the MBMS service synchronization networking in the enhanced High Speed Packet Access (HSPA+) system, the upper layer network element is GGSN, SGSN or BMSC, and the lower layer network element is a RNC or NodeB+.
Combination 3. In the MBMS service synchronization networkting in the Long-Term Evolution (LTE) system, the upper layer network element is an MBMS Gateway (MGW), or a Multicell/Multicast Coordination Entity (MCE), and the lower layer network element is an E-UTRAN NodeB.

### Method embodiment 2

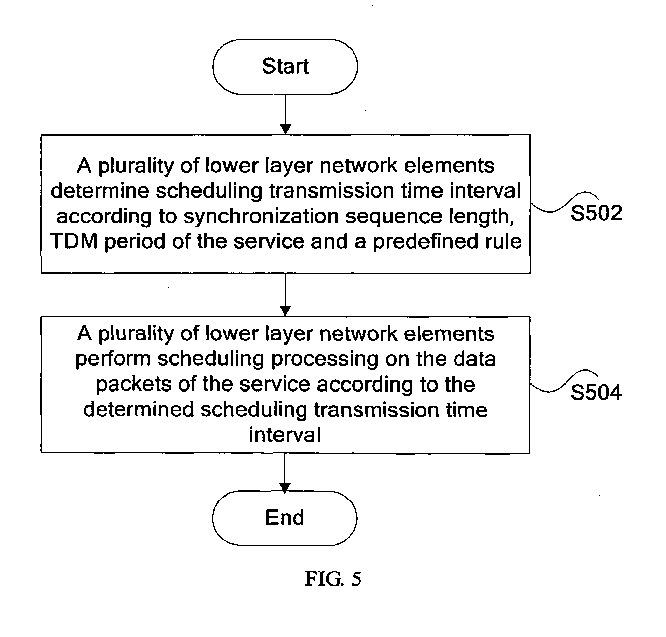

FIG. 5 is a flow chart of the synchronously scheduling method according to an embodiment of the present invention. As shown in FIG. 5, the method comprises the following steps (Step S502 to Step S504).

Step S502, multiple lower layer network elements determine the scheduling transmission time interval according to the length of the synchronization sequences, the time division multiplexing period, and a predefined rule;

Step S504, the multiple lower layer network elements perform the scheduling processing on the service data packets according to the determined scheduling transmission time interval.

In the specific implementation, the multiple lower network elements acquire the length of the synchronization sequences by the system configuration, and the appointed network element informs the multiple lower layer network elements of the length of the synchronization sequences. The multiple lower network elements acquire the time division multiplexing period by the system configuration and the appointed network element informs the multiple lower layer network element of the time division multiplexing period. The multiple lower network elements acquire the predefined rule by the system configuration and the appointed network element informs the multiple lower layer network elements of the predefined rule.

Wherein, the appointed network element includes one of the followings: an upper layer network element, and a lower layer network element other than the multiple lower layer network elements.

Preferably, the multiple lower layer network elements determining the scheduling transmission time interval according to the length of the synchronization sequences, the time division multiplexing period and the predefined rule includes the multiple lower layer network elements setting the scheduling transmission time interval as a common multiple of the time division multiplexing period and the length of the synchronization sequences.

Wherein, the length of the synchronization sequence is the scheduling period.

Compared with the prior art, the technical solution provided in the examples of the present invention, in which the multiple lower layer network elements performing the same service get the scheduling transmission time interval of the service, and use the same scheduling method for the service, can avoid the disturbance to the MBSFN network and the destruction to the MBSFN conditions.

When the appointed network element is a lower layer network element other than the multiple lower layer network elements, the processing procedure of the embodiment of the present invention will be illustrated with examples 5 and 6 as follows.

### Example 5

First, the lower layer network element as the appointed network element gets the length of the synchronization sequence and the time division multiplexing period of the appointed service by the system configuration, and this lower layer network element sends through a signaling message the acquired length of the synchronization sequence, the time division multiplexing period and the rule which is used to determine the scheduling transmission time interval for the appointed service according to the length of the synchronization sequence and the time division multiplexing period to each lower layer network element performing the appointed service.

Next, each of the lower layer network elements receives the length of the synchronization sequence, the time division multiplexing period and the rule which is used to determine the scheduling transmission time interval for the appointed service according to the length of the synchronization sequence and the time division multiplexing period, and determines the scheduling transmission time interval according to the rule. Specifically, the scheduling transmission time interval can be set as a common multiple of the length of the synchronization sequence and the time division multiplexing period, and preferably, the scheduling transmission time interval can be set as the lowest common multiple of the length of the synchronization sequence and the time division multiplexing period.

Each of the lower layer network elements performs the scheduling processing on the received service synchronization sequence according to the determined scheduling transmission time interval.

### Example 6

First, the upper layer network element which the lower layer network element as the appointed network element belongs to informs the lower layer network element of the length of the synchronization sequence, and gets the time division multiplexing period by the system configuration. The lower layer network element sends through a signaling message the acquired length of the synchronization sequence, the time division multiplexing period and the rule which is used to determine the scheduling transmission time interval for the appointed service according to the length of the synchronization sequence and the time division multiplexing period to each lower layer network element that performs the appointed service.

Next, each of the lower layer network elements receives the length of the synchronization sequence, the time division multiplexing period and the rule which is used to determine the scheduling transmission time interval for the appointed service according to the length of the synchronization sequence and the time division multiplexing period, and determines the scheduling transmission time interval according to the rule. Specifically, the scheduling transmission time interval can be set as a common multiple of the length of the synchronization sequence and the time division multiplexing period, and preferably, the scheduling transmission time interval can be set as the lowest common multiple of the length of the synchronization sequence and the time division multiplexing period.

Each of the lower layer network elements performs the scheduling processing on the received service synchronization sequence according to the determined scheduling transmission time interval.

When the appointed network element is the upper layer network element, the processing procedure of the embodiment of the present invention will be illustrated with examples 7 and 8 as follows.

### Example 7

First, the upper layer network element gets the length of the synchronization sequence and the time division multiplexing period of the appointed service by the system configuration, and sends through a signaling message the acquired length of the synchronization sequence, the time division multiplexing period and the rule which is used to determine the scheduling transmission time interval for the appointed service according to the length of the synchronization sequence and the time division multiplexing period to each lower layer network element that performs the appointed service.

Next, each of the lower layer network elements receives the length of the synchronization sequence, the time division multiplexing period and the rule which is used to determine the scheduling transmission time interval for the appointed service according to the length of the synchronization sequence and the time division multiplexing period, and determines the scheduling transmission time interval according to the rule. Specifically, the scheduling transmission time interval can be set as a common multiple of the length of the synchronization sequence and the time division multiplexing period, and preferably, the scheduling transmission time interval can be set as the lowest common multiple of the length of the synchronization sequence and the time division multiplexing period.

Each of the lower layer network elements performs the scheduling processing on the received service synchronization sequence according to the determined scheduling transmission time interval.

### Example 8

First, a lower layer network element that belongs to the upper layer network element as the appointed network element informs the upper layer network element of the time division multiplexing period. The upper layer network element gets the length of the synchronization sequence by the system configuration and sends through a signaling message the acquired length of the synchronization sequence, the time division multiplexing period and the rule which is used to determine the scheduling transmission time interval for the appointed service according to the length of the synchronization sequence and the time division multiplexing period to each lower layer network element that performs the appointed service.

Next, each of the lower layer network elements receives the length of the synchronization sequence, the time division multiplexing period and the rule which is used to determine the scheduling transmission time interval for the appointed service according to the length of the synchronization sequence and the time division multiplexing period, and determines the scheduling transmission time interval according to the rule. Specifically, the scheduling transmission time interval can be set as a common multiple of the length of the synchronization sequence and the time division multiplexing period, and preferably, the scheduling transmission time interval can be set as the lowest common multiple of the length of the synchronization sequence and the time division multiplexing period.

Each of the lower layer network elements performs the scheduling processing on the received service synchronization sequence according to the determined scheduling transmission time interval.

As mentioned above, compared with the prior art, by using the synchronization processing method provided by the present invention, in which multiple lower layer network elements performing the same service get the scheduling transmission time interval of the service, and use the same scheduling method for the service, the disturbance to the MBSFN and the destruction to the MBSFN conditions can be avoided.

The above description is just preferred embodiments of the present invention, and does not intend to limit the present invention. For those having ordinary skills in the art, the present invention may have various modifications and variations. However, all the modification, equivalent replacement and improvement made under the principle of the present invention shall be contained in the protection scope of the present invention.

### Industrial Applicability

The method provided by the present invention, in which multiple lower layer network elements performing the same service get the scheduling transmission time interval of the service, and adopts the same scheduling method for the service, can avoid the disturbance to the MBSFN and the destruction to the MBSFN conditions.

## Claims

1. A synchronous scheduling method, comprising the following steps of:
an appointed network element determining a scheduling transmission time interval of a service according to a length of a synchronization sequence and time division multiplexing period of the service, and transmitting the determined scheduling transmission time interval to a plurality of lower layer network elements; and
said a plurality of lower layer network elements performing scheduling processing on data packets of the service according to the scheduling transmission time interval.

2. The method as claimed in claim 1, further comprising:
the appointed network element acquiring the length of the synchronization sequence and the time division multiplexing period of the service according to a predefined rule.

3. The method as claimed in claim 2, wherein the appointed network element comprises one of the followings: an upper layer network element and a lower layer network element other than said a plurality of lower layer network elements;
the upper layer network element comprises one of the followings: a multimedia gateway in a Long-Term Evolution system, a Gateway General Packet Radio Service Supporting Node, GPRS, a Serving General Packet Radio Service Supporting Node, a multimedia broadcast control center in a Universal Terrestrial Radio Access Network system, and a master NB+ in an enhanced High Speed Packet Access system,
the lower layer network element comprise one of the followings: an ENB in the Long-Term Evolution system, a slave Radio Network Controller in the UTRA system, and a standby NB+ in the enhanced High Speed Packet Access system.

4. The method as claimed in claim 3, wherein if the appointed network element is a lower layer network element other than said a plurality of the lower layer network elements, the acquiring of the length of the synchronization sequence and the time division multiplexing period of the service according to the predefined rule comprises:
the lower layer network element as the appointed network element acquiring the length of the synchronization sequence and the time division multiplexing period of the service by system configuration; or
an upper layer network element that the lower layer network element as the appointed network element belongs to informing the lower layer network element of the length of the synchronization sequence, and acquiring the time division multiplexing period by the system configuration.

5. The method as claimed in claim 3, wherein if the appointed network element is the upper layer network element, the acquiring of the length of the synchronization sequence and the time division multiplexing period of the service according to the predefined rule comprises:
the upper layer network element as the appointed network element acquiring the length of the synchronization sequence and the time division multiplexing period by the system configuration; or
a lower layer network element that belongs to the upper layer network element as the appointed network element informing the upper layer network element of the time division multiplexing period, and acquiring the length of the synchronization sequence by the system configuration.

6. The method as claimed in any claim from claim 1 to claim 5, wherein the appointed network element determining the scheduling transmission time interval of the service according to the length of the synchronization sequence and the time division multiplexing period comprises:
setting the scheduling transmission time interval as a common multiple of the length of the synchronization sequence and the time division multiplexing period.

7. A synchronous scheduling method, comprising the following steps of:
a plurality of lower layer network elements determining scheduling transmission time interval according to length of a synchronization sequence, time division multiplexing period of a service, and a predefined rule; and
said a plurality of lower layer network elements performing scheduling processing on data packets of the service according to the determined scheduling transmission time interval.

8. The method as claimed in claim 7, further comprising:
said a plurality of lower layer network elements acquiring the length of the synchronization sequence, the time division multiplexing period and the predefined rule by system configuration; or
an appointed network element informing said a plurality of lower layer network elements of the length of the synchronization sequence, the time division multiplexing period and the predefined rule.

9. The method as claimed in claim 8, wherein the appointed network element comprises one of the followings: an upper layer network element and a lower layer network element other than said a plurality of lower layer network elements;
the upper layer network element comprises one of the followings: a multimedia gateway in a Long-Term Evolution system, a Gateway General Packet Radio Service Supporting Node, a Serving General Packet Radio Service Supporting Node, a multimedia broadcast control center in the Universal Terrestrial Radio Access Network, and a master NB+ in an enhanced High Speed Packet Access system,
the lower layer network element comprises one of the followings: an ENB in the Long-Term Evolution system, a slave Radio Network Controller in the Universal Terrestrial Radio Access Network system, and a slave NB+ in the enhanced High Speed Packet Access system.

10. The method as claimed in any claim from claim 7 to claim 9, wherein said a plurality of lower layer network elements determining the scheduling transmission time interval according to the length of the synchronization sequence, the time division multiplexing period of the service and the predefined rule comprises:
said a plurality of lower layer network element setting the scheduling transmission time interval as a common multiple of the length of the synchronization sequence and the time division multiplexing period.

## Patentansprüche

1. Synchrones Scheduling-Verfahren, folgende Schritte umfassend:
Bestimmen eines Scheduling-Übertragungszeitintervalls eines Dienstes entsprechend einer Länge einer Synchronisationssequenz und eines Zeitraums zum Zeitmultiplexing des Dienstes durch ein benanntes Netzwerkelement, und
Übertragen des bestimmten Scheduling-Übertragungszeitintervalls an eine Mehrzahl von Netzwerkelementen in unteren Schichten; und
Ausführen von Scheduling-Verarbeitung von Datenpaketen des Dienstes durch diese Mehrzahl von Netzwerkelementen in unteren Schichten entsprechend des Scheduling-Übertragungszeitintervalls.

2. Verfahren nach Anspruch 1, weiterhin umfassend:
Übernehmen der Länge der Synchronisationssequenz und des Zeitraums zum Zeitmultiplexing des Dienstes entsprechend einer vorbestimmten Regel durch das benannte Netzwerkelement.

3. Verfahren nach Anspruch 2, wobei das benannte Netzwerkelement eines der Folgenden umfasst:
ein Netzwerkelement in einer oberen Schicht und ein Netzwerkelement in einer unteren Schicht, wobei das Netzwerkelement sich von einem aus der Mehrzahl von Netzwerkelementen in unteren Schichten unterscheidet;
das Netzwerkelement in der oberen Schicht umfasst eines der Folgenden: einen Multimedia-Zugang in einem Long Term Evolution System, eine Gateway General Packet Radio Service Support Node, GPRS, eine Serving General Packet Radio Service Support Node, ein Multimedia-Übertragungs-Kontrollzentrum in einem Universal Terrestrial Radio Access Network System, und einen Master NB+ in einem verbesserten High Speed Packet Access System,
das Netzwerkelement in der unteren Schicht umfasst eines der Folgenden: eine ENB in dem Long Term Evolution System, eine Slave-Radio-Network-Steuerung im UTRA-System, und eine Standby-NB+ im verbesserten High Speed Packet Access System.

4. Verfahren nach Anspruch 3, wobei, wenn das benannte Netzwerkelement ein Netzwerkelement in einer unteren Schicht ist, welches sich von einem der Mehrzahl von Netzwerkelementen in unteren Schichten unterscheidet, das Übernehmen der Länge der Synchronisationssequenz und des Zeitraums zum Zeitmultiplexing des Dienstes entsprechend einer vorbestimmten Regel umfasst:
Übernehmen der Länge der Synchronisationssequenz und des Zeitraums zum Zeitmultiplexing des Dienstes durch das Netzwerkelement in der unteren Schicht als benanntes Netzwerkelement durch Systemkonfiguration; oder
Informieren des Netzwerkelements in der unteren Schicht über die Länge der Synchronisationssequenz durch ein Netzwerkelement in einer oberen Schicht, welchem das Netzwerkelement in der unteren Schicht, welches das benannte Netzwerkelement ist, angehört, und Übernehmen des Zeitraums zum Zeitmultiplexing durch die Systemkonfiguration.

5. Verfahren nach Anspruch 3, wobei, wenn das benannte Netzwerkelement ein Netzwerkelement in einer oberen Schicht ist, das Übernehmen der Länge der Synchronisationssequenz und des Zeitraums zum Zeitmultiplexing des Dienstes entsprechend der vorbestimmten Regel umfasst:
Übernehmen der Länge der Synchronisationssequenz und des Zeitraums zum Zeitmultiplexing durch das Netzwerkelement in einer oberen Schicht als benanntes Netzwerkelement; oder
Informieren des Netzwerkelements in einer oberen Schicht über den Zeitraum zum Zeitmultiplexing durch ein Netzwerkelement in einer unteren Schicht, welches dem Netzwerkelement in der oberen Schicht angehört, und Übernehmen der Länge der Synchronisationssequenz durch die Systemkonfiguration.

6. Verfahren nach einem der Ansprüche 1 bis 5, wobei das benannte Netzwerkelement das Schelduling-Übertragungszeitintervall des Dienstes entsprechend der Länge der Synchronisationssequenz und des Zeitraums zum Zeitmultiplexing bestimmt, weiter umfassend:
Festlegen des Scheduling-Übertragungszeitintervalls als ein gemeinsames Vielfaches der Länge der Synchronisationssequenz und des Zeitraums zum Zeitmultiplexing.

7. Synchrones Scheduling-Verfahren, folgende Schritte umfassend:
Bestimmen eines Scheduling-Übertragungszeitintervalls entsprechend einer Länge einer Synchronisationssequenz, eines Zeitraums zum Zeitmultiplexing eines Dienstes und einer vorbestimmten Regel durch eine Mehrzahl von Netzwerkelementen in unteren Schichten; und
Durchführen einer Scheduling-Verarbeitung von Daten-Paketen des Dienstes entsprechend dem bestimmten Scheduling-Übertragungszeitintervall durch die besagte Mehrzahl von Netzwerkelementen in unteren Schichten.

8. Verfahren nach Anspruch 7, weiterhin umfassend:
Übernehmen der Länge der Synchronisationssequenz, des Zeitraums zum Zeitmultiplexing und der vorbestimmten Regel durch die Mehrzahl von Netzwerkelementen in unteren Schichten durch Systemkonfiguration; oder
Informieren der Mehrzahl von Netzwerkelementen in unteren Schichten über die Länge der Synchronisationssequenz, des Zeitraums zum Zeitmultiplexing und der vorbestimmten Regel durch ein benanntes Netzwerkelement.

9. Verfahren nach Anspruch 8, wobei das benannte Netzwerkelement eines der Folgenden umfasst:
ein Netzwerkelement in einer oberen Schicht und ein Netzwerkelement in einer unteren Schicht, welches sich von einem der Mehrzahl von Netzwerkelementen in unteren Schichten unterscheidet;
das Netzwerkelement in einer oberen Schicht umfasst eines der Folgenden:
einen Multimedia-Zugang in einem Long Term Evolution System, eine Gateway General Packet Radio Service Support Node, eine Serving General Packet Radio Service Support Node, ein Multimedia-Übertragungs-Kontrollzentrum in einem Universal Terrestrial Radio Access Network System, und einen Master NB+ in einem verbesserten High Speed Packet Access System,
das Netzwerkelement in einer unteren Schicht umfasst eines der Folgenden: eine ENB in dem Long Term Evolution System, eine Slave-Radio-Network-Steuerung im UTRA-System, und eine Standby-NB+ im verbesserten High Speed Packet Access System.

10. Verfahren nach einem der Ansprüche 7 bis 9, wobei ein Bestimmen des Scheduling-Übertragungszeitintervalls entsprechend der Länge der Synchronisationssequenz, des Zeitraums zum Zeitmultiplexing des Dienstes und der vorbestimmten Regel durch die Mehrzahl von Netzwerkelementen in unteren Schichten umfasst:
Festlegen eines Scheduling-Übertragungszeitintervalls als ein gemeinsames Vielfaches der Länge der Synchronisationssequenz und des Zeitraums zum Zeitmultiplexing durch die Mehrzahl von Netzwerkelementen in unteren Schichten.

## Revendications

1. Procédé d'ordonnancement synchrone comprenant les étapes suivantes :
le fait qu'un élément de réseau désigné détermine un intervalle de temps de transmission d'ordonnancement d'un service en fonction d'une longueur d'une séquence de synchronisation et d'une période de multiplexage par répartition dans le temps du service, et transmet l'intervalle de temps de transmission d'ordonnancement déterminé à une pluralité d'éléments de réseau de couche inférieure ; et
le fait que ladite une pluralité d'éléments de réseau de couche inférieure effectue un traitement d'ordonnancement sur des paquets de données du service en fonction de l'intervalle de temps de transmission d'ordonnancement.

2. Procédé selon la revendication 1, comprenant en outré :
le fait que l'élément de réseau désigné acquière la longueur de la séquence de synchronisation et la période de multiplexage par répartition dans le temps du service en fonction d'une règle prédéfinie.

3. Procédé selon la revendication 2, dans lequel l'élément de réseau désigné comprend un parmi ce qui suit : un élément de réseau de couche supérieure et un élément de réseau de couche inférieure autres que ladite une pluralité d'éléments de réseau de couche inférieure ;
l'élément de réseau de couche supérieure comprend un parmi ce qui suit : une passerelle multimédia dans un système LTE, un GGSN, GPRS, un SGSN, un centre de commande de diffusion multimédia dans un système UTRAN et un NB+ maître dans un système HSPA+,
l'élément de réseau de couche inférieure comprend un parmi ce qui suit : un ENB dans le système LTE, un RNC esclave dans le système UTRAN et un NB+ en attente dans le système HSPA+.

4. Procédé selon la revendication 3, dans lequel, si l'élément de réseau désigné est un élément de réseau de couche inférieure autre que ladite une pluralité d'éléments de réseau de couche inférieure, l'acquisition de la longueur de la séquence de synchronisation et de la période de multiplexage par répartition dans le temps du service en fonction de la règle prédéfinie comprend :
le fait que l'élément de réseau de couche inférieure en tant qu'élément de réseau désigné acquière la longueur de la séquence de synchronisation et la période de multiplexage par répartition dans le temps du service par une configuration de système ; ou
le fait que l'élément de réseau de couche supérieure auquel appartient l'élément de réseau de couche inférieure en tant qu'élément de réseau désigné informe l'élément de réseau de couche inférieure de la longueur de la séquence de synchronisation et acquière la période de multiplexage par répartition dans le temps par la configuration de système.

5. Procédé selon la revendication 3, dans lequel, si l'élément de réseau désigné est l'élément de réseau de couche supérieure, l'acquisition de la longueur de la séquence de synchronisation et de la période de multiplexage par répartition dans le temps du service en fonction de la règle prédéfinie comprend :
le fait que l'élément de réseau de couche supérieure en tant qu'élément de réseau désigné acquière la longueur de la séquence de synchronisation et la période de multiplexage par répartition dans le temps par la configuration de système ; ou
le fait qu'un élément de réseau de couche inférieure qui appartient à l'élément de réseau de couche supérieure en tant qu'élément de réseau désigné informe l'élément de réseau de couche supérieure de la période de multiplexage par répartition dans le temps, et acquière la longueur de la séquence de synchronisation par la configuration de système.

6. Procédé selon l'une quelconque de la revendication 1 à la revendication 5, dans lequel le fait que l'élément de réseau désigné détermine l'intervalle de temps de transmission d'ordonnancement du service en fonction de la longueur de la séquence de synchronisation et de la période de multiplexage par répartition dans le temps comprend :
le fait de fixer l'intervalle de temps de transmission d'ordonnancement comme un multiple commun de la longueur de la séquence de synchronisation et de la période de multiplexage par répartition dans le temps.

7. Procédé d'ordonnancement synchrone comprenant les étapes suivantes :
le fait qu'une pluralité d'éléments de réseau de couche inférieure détermine un intervalle de temps de transmission d'ordonnancement en fonction de la longueur d'une séquence de synchronisation, de la période de multiplexage par répartition dans le temps d'un service et d'une règle prédéfinie ; et
le fait que ladite une pluralité d'éléments de réseau de couche inférieure effectue un traitement d'ordonnancement sur des paquets de données du service en fonction de l'intervalle de temps de transmission d'ordonnancement déterminé.

8. Procédé selon la revendication 7, comprenant en outre :
le fait que ladite une pluralité d'éléments de réseau de couche inférieure acquière la longueur de la séquence de synchronisation, la période de multiplexage par répartition dans le temps et la règle prédéfinie par une configuration de système ; ou
le fait qu'un élément de réseau désigné informe ladite une pluralité d'éléments de réseau de couche inférieure de la longueur de la séquence de synchronisation, de la période de multiplexage par répartition dans le temps et de la règle prédéfinie.

9. Procédé selon la revendication 8, dans lequel l'élément de réseau désigné comprend un parmi ce qui suit : un élément de réseau de couche supérieure et un élément de réseau de couche inférieure autres que ladite une pluralité d'éléments de réseau de couche inférieure.
l'élément de réseau de couche supérieure comprend un parmi ce qui suit : une passerelle multimédia dans un système LTE, un GGSN, un SGSN, un centre de commande de diffusion multimédia dans le système UTRAN et un NB+ maître dans un système HSPA+,
l'élément de réseau de couche inférieure comprend un parmi ce qui suit : un ENB dans le système LTE, un RNC esclave dans le système UTRAN et un NB+ esclave dans le système HSPA+.

10. Procédé selon une quelconque revendication de la revendication 7 à la revendication 9, dans lequel le fait que ladite une pluralité d'éléments de réseau de couche inférieure détermine l'intervalle de temps de transmission d'ordonnancement en fonction de la longueur de la séquence de synchronisation, de la période de multiplexage par répartition dans le temps du service et de la règle prédéfinie comprend :
le fait que ladite une pluralité d'éléments de réseau de couche inférieure fixe l'intervalle de temps de transmission d'ordonnancement comme un multiple commun de la longueur de la séquence de synchronisation et de la période de multiplexage par répartition dans le temps.
